# EUROPÄISCHE PATENTSCHRIFT

(11) **EP 3 453 090 B1**
(45) Veröffentlichungstag und Bekanntmachung des Hinweises auf die Patenterteilung: **22.06.2022**
(21) Anmeldenummer: 17718505.5
(22) Anmeldetag: 13.04.2017
(51) Int. Cl.: H02G 5/10, H01H 9/52, F28D 15/02, H01B 7/42

(54) **GENERATORSCHALTER MIT EINER KÜHLVORRICHTUNG**
COOLING DEVICE
DISPOSITIF DE REFROIDISSEMENT

(30) Priorität: 02.05.2016 EP 16167941
(43) Veröffentlichungstag der Anmeldung: 13.03.2019
(73) Patentinhaber: Hitachi Energy Switzerland AG, 5400 Baden (CH)
(72) Erfinder: HILLER, Andreas, 5415 Nussbaumen (CH); GANTER, Philipp, 79771 Klettgau (DE); MAUROUX, Jean-Claude, 5034 Suhr (CH)
(74) Vertreter: Michalski Hüttermann & Partner Patentanwälte mbB
(86) Internationale Anmeldenummer: PCT/EP2017/058985
(87) Internationale Veröffentlichungsnummer: WO 2017/190936

(56) Entgegenhaltungen:
- EP-A1- 1 657 731
- EP-A1- 1 737 009
- WO-A1-2014/048680
- CN-A- 102 592 866
- FR-A1- 2 604 028

## Beschreibung

### TECHNISCHES GEBIET

Die vorliegende Erfindung bezieht sich auf einen Generatorschalter gemäss dem Oberbegriff von Patentanspruch 1.

Generatorschalter mit Kühlvorrichtungen zur Kühlung von auf Hochspannungspotential liegenden Stromleitern nutzen die vorteilhaften Eigenschaften eines Kühlmittels/Arbeitsmediums aus, das beim Übergang in die Dampfphase eine grosse Wärmemenge aufnehmen kann. Die Kühlvorrichtung weist einen mit dem Stromleiter wärmeleitend verbundenen und im Betrieb auf Hochspannungspotential liegendem Verdampfer auf sowie einen auf Erdpotential liegenden Kondensator, sowie ein Leitungssystem, durch welches kondensiertes flüssiges Kühlmittel vom Kondensator zum Verdampfer und Kühlmitteldampf (dampfförmiges Kühlmittel) vom Verdampfer zum Kondensator geführt ist. Ferner weist die Kühlvorrichtung einen der Führung von flüssigem Kühlmittel und von Kühlmitteldampf dienenden Isolator auf, welcher zur Trennung von Erd- und Hochspannungspotential dient. Da das Kühlmittel beim Durchgang durch den Isolator starken elektrischen Feldern ausgesetzt ist, ist das Kühlmittel ein dielektrisch hoch belastbares Fluid, wie etwa eine Flüssigkeit auf der Basis eines fluorierten Kohlenwasserstoffs, Hydro-Fluor-Ether, beispielsweise "HFE-7100" der Firma 3M, Ammoniak oder Aceton.

### STAND DER TECHNIK

Ein Generatorschalter mit einer Kühlvorrichtung der eingangs genannten Art ist beispielsweise offenbart in EP 1 657 731 B2 oder der WO 2014/048680 A1. Der Oberbegriff des unabhängigen Anspruchs 1 ist auf Basis der Offenbarung der WO 2014/048680 A1 formuliert. Die von dort bekannte Kühlvorrichtung weist ein Wärmerohr (heat pipe) auf, in dem die flüssige und die dampfförmige Phase des Kühlmittels in einem einzigen Behälter zwischen einem Verdampfer und einem Kondensator bewegt werden. Der thermische Wirkungsgrad einer solchen Kühlvorrichtung ist vergleichsweise gering ist. Zudem benötigt diese Vorrichtung ein dielektrisch hoch beanspruchbares Hilfsgas, wie Luft, Stickstoff oder Schwefelhexafluorid, dessen Füllstand ebenso wie der Füllstand des Kühlmittels zu überwachen sind.

In EP 1 737 009 A1 wird eine elektrische Anlage mit einem Kühlelement und Verfahren zum Betrieb dieser Anlage offenbart. Die Anlage enthält einen Stromleiter, ein Kühlelement und eine Überwachungseinrichtung. In CN 102 592 866 A ist ein Verdampfungskühlsystem für einen Leistungsschalter offenbart.

### DARSTELLUNG DER ERFINDUNG

Der Erfindung, wie sie in den Patentansprüchen angegeben ist, liegt die Aufgabe zugrunde, einen Generatorschalter der eingangs genannten Art zu schaffen, dessen Kühlvorrichtung sich durch einen hohen Wirkungsgrad und eine grosse Betriebssicherheit auszeichnet.

Diese Aufgabe wird durch den in Anspruch 1 definierten Generatorschalter gelöst.

Unter dem Begriff "Hochspannung" wird ein mit hoher Spannung und/oder hohen Strömen belasteter Stromleiter verstanden. Die Nennspannungen können bis zu mehreren 100 kV betragen. Typische Werte der Nennspannung liegen jedoch im Allgemeinen zwischen einigen kV und einigen 10 kV bei Nennströmen in der Grössenordnung von mehreren 10 kA. Daher liegt der Verdampfer 10 auf Hochspannungspotential. Der Kondensator befindet sich hingegen auf Erdpotential oder höchstens auf einem gegenüber dem Verdampfer um mindestens eine Grössenordnung niedrigeren Potential, von höchstens einigen wenigen kV. An der Isolierstrecke des Isolators fällt daher weitgehend die gesamte Hochspannung ab. Die Kapselung eines Generatorschalters kann auch elektrisch isoliert zum tatsächlichen Erdpotential angeordnet sein. Eine solche Ausführungsform sei nachfolgend dennoch vom Begriff "Erdpotential" umfasst, dass ihr Spannungspotential lediglich einige wenige kV beträgt.

Je nach Generatorschalter kann der Isolator selber mit der Kapselung verbunden sein (also auf Erdpotential liegen) oder mit dem Stromleiter verbunden sein (also auf Hochspannungspotential liegen).

Der Generatorschalter weist eine gravitationsgetriebene Kühlvorrichtung mit einem Verdampfer und einem oberhalb des Verdampfers angeordneten Kondensator und einem Kühlmittel auf. Unter dem Begriff "oberhalb" wird dabei ein

Höhenversatz in einer Richtung entgegen der Wirkrichtung der Gravitation verstanden. Weiter ist der Verdampfer wärmeleitend mit dem Stromleiter verbunden ist und liegt damit im Betrieb des Generatorschalters auf Hochspannungspotential. Der Kondensator ist mit der Kapselung, also dem Gehäuse des Generatorschalters verbunden ist und liegt damit im Betrieb des Generatorschalters auf Erdpotential. Der Verdampfer ist mit dem Kondensator über ein Leitungssystem mit einem Isolator verbunden, so dass im Betrieb des Generatorschalters Kühlmitteldampf vom Verdampfer zum Kondensator und flüssiges Kühlmittel vom Kondensator zum Verdampfer führbar ist. Der Isolator weist eine dielektrische Isolierstrecke mit einem oberen Ende auf. Das Leitungssystem weist einen Kühlmittelleiter auf, welcher einen Kühlmittelausgang des Kondensators mit einem Kühlmitteleingang des Verdampfers verbindet und einen Kühlmitteldampfleiter, welcher einen Kühlmitteldampfausgang des Verdampfers mit einem Kühlmitteldampfeingang des Kondensators verbindet, derart dass ein geschlossener ringförmiger Kühlkreislauf (im Englischen closed loop type thermosyphon genannt) gebildet ist. Im Betrieb des Generatorschalters ist ein Pegel des flüssigen Kühlmittels im Leitungssystem bei ruhender Kühlvorrichtung mindestens so hoch ist, wie das obere Ende der Isolierstrecke im Isolator. Unter dem Begriff "oberes Ende" wird dabei ein dem Kondensator zugewandtes Ende der Isolierstrecke im Isolator verstanden.

Als Kühlmittel wird ein Hydrofluorcarbon, wie zum Beispiel "R-245fa" der Fa. Honeywell, oder ein Hydrofluorolefin, wie zum Beispiel "R-1233 zd (E)" der Fa. Honeywell eingesetzt. Auch eine Mischung beider Kühlmittel ist zu diesem Zweck geeignet.

Der Isolator weist einen im polymeren, gegebenenfalls füllstoff- oder faserverstärkten Isolierkörper auf, welcher beispielsweise aus einem Giessharz gefertigt ist. Alternativ dazu kann der Isolator einen keramischen Isolierkörper aufweisen. Je nach Ausführungsform beinhaltet der Isolierkörper Epoxid, das heisst ein Epoxidharz. Solche Isolatoren erleichtern ein Einbinden von Anschlusstücken zur Verbindung des Isolators mit dem Kühlmittelleiter und dem thermoplastischen Kunststoffs oder eines Giessprozesses wie zum Beispiel Vakuumgiessen (vacuum casting) herstellbar.

Ein grosser Vorteil des Generatorschalters mit einer solchen Kühlvorrichtung liegt darin, dass er lediglich ein Kühlmittel als arbeitsmedium, jedoch kein zusätzliches Hilfsgas mehr benötigt. Dieses Kühlmittel wird in seiner dampfförmigen Phase zwischen dem Verdampfer und dem Kondensator in einem Kühlmitteldampfleiter geführt, der unabhängig ist von einem Kühlmittelleiter, in dem das kondensierte Kühlmittel in seiner flüssigen Phase von Kondensator zum Verdampfer zurückströmt. Das in den Verdampfer zurückfliessende Kühlmittel in flüssiger Form ist getrennt vom in den Kondensator aufsteigenden Kühlmitteldampf geführt, so dass einerseits zuverlässig vermieden werden kann dass der aufsteigende Kühlmitteldampf vom zurückfließende Kühlmittel vor dem Eintritt in den Kondensator heruntergekühlt wird. Andererseits wir durch die Anordnung in einem geschlossenen ringförmigen Kühlkreislauf sichergestellt, dass der aufsteigende Kühlmitteldampf das zurückfließende Kühlmittel nicht vorwärmt. Diese Massnahmen führen im Vergleich mit klassischen Wärmerohren (heat pipes) zu einem deutlich besseren thermischen Wirkungsgrad.

Da der Pegel des flüssigen Kühlmittels im Leitungssystem bei ruhender Kühlvorrichtung stets mindestens so hoch ist, wie das obere Ende der Isolierstrecke im Isolator, füllt das flüssige Kühlmittel zudem im Stillstand der Kühlvorrichtung die im Isolator vorgesehene Isolierstrecke, wodurch eine Herabsetzung der dielektrischen Festigkeit des Isolators auch bei tiefen Temperaturen vermieden wird. Unter dem Begriff tiefe Temperaturen werden Temperaturen verstanden, bei denen sich der Stromleiter nicht auf Betriebstemperatur befindet, sondern weitgehend auf Umgebungstemperatur. Dementsprechend wird so auch eine sehr hohe Betriebssicherheit der Kühlvorrichtung und damit des Generatorschalters erreicht.

Falls erforderlich ist der Kühlmitteldampfleiter gegenüber dem Kühlmittelleiter thermisch isoliert ausgeführt.

In einer geometrisch bevorzugten Ausführungsform weist der Isolator einen als erster Isolierkanal ausgebildeten Abschnitt des Kühlmittelleiters und einen als zweiter Isolierkanal ausgebildeten Abschnitt des Kühlmitteldampfleiters auf.

Der Isolator muss einen als erster Isolierkanal ausgebildeten Abschnitt des Kühlmittelleiters und einen als zweiter Isolierkanal ausgebildeten Abschnitt des Kühlmitteldampfleiters aufweisen und in der Kühlvorrichtung kann ein der Bildung des Kühlmittelpegels dienendes und auf dem Potential des Kondensators gehaltenes Kühlmittelreservoir vorgesehen sein, welches mit den beiden Isolierkanälen kommuniziert. Bei dieser Ausbildung der Kühlvorrichtung wird mit einfachen Mitteln erreicht, dass das Kühlmittel den Verdampfer und die Isolierstrecke flutet, da das Kühlmittelreservoir sich ja auf einem höheren Niveau als die Isolierstrecke befindet - also der Pegel des flüssigen Kühlmittels mindestens das gleiche Niveau wie das obere Ende der Isolierstrecke aufweist. Dies ist vorteilhaft, weil so lediglich der leicht zu kontrollierende Pegel des flüssigen Kühlmittels im Kühlreservoir zu überwachen ist. Zudem gewährleistet das Kühlmittelreservoir eine Kompensation von allfälligem Kühlmittelverlust über einen grossen Zeitraum.

Je nach Ausführungsform ist das Kühlmittelreservoir im Kondensator angeordnet und kann bei Bedarf einen dem Auffangen des kondensierten Kühlmitteldampfes dienenden Sammelkanal aufweisen.

Geometrisch einfache Kühlvorrichtungen sind realisierbar, wenn das Kühlmittelreservoir im Kühlmittelleiter angeordnet ist. In einer besonders einfachen Ausführungsform ist das Kühlmittelreservoir durch einen Rohrabschnitt mit einem Durchmesser realisiert, welcher viel grösser als der Durchmesser des restlichen Kühlmittelleiters ist.

Falls erforderlich, ist das Kühlmittelreservoir mit dem Stromleiter verbunden, so dass das Kühlmittelreservoir (50) auf dem Hochspannungspotential des Stromleiters ist.

Um eine optimale Einsetzbarkeit zu gewährleisten weist der Isolator pro Isolierkanal je einen die beiden Isolierkanäle aufnehmenden Isolierkörper und ein mit dem Stromleiter verbundenes erstes Anschlussstück und ein mit dem Kondensator verbundenes zweites Anschlussstück auf. Um die Anschliessbarkeit zu erleichtern, weist der Isolator einen die beiden Isolierkanäle aufnehmenden Isolierkörper und pro Isolierkanal je zwei Anschlussstücke auf. Dabei ist ein erstes Anschlussstück der beiden Anschlussstücke mit dem Stromleiter verbunden, beispielsweise auf ihm fixiert ist und mindestens einen auf Hochspannungspotential führbaren und mit dem zweiten Isolierkanal kommunizierenden ersten Kühlmitteldampfanschluss sowie mindestens einen auf Hochspannungspotential führbaren und mit dem ersten Isolierkanal kommunizierenden ersten Kühlmittelanschluss aufweist. Weiter ist das zweite Anschlussstück mit dem Kondensator verbundenen und weist mindestens einen auf Erdpotential führbaren und mit dem ersten Isolierkanal kommunizierenden zweiten Kühlmittelanschluss und mindestens einen auf Erdpotential führbaren und mit dem zweiten Isolierkanal kommunizierenden zweiten Kühlmitteldampfanschluss auf. Ein derart ausgebildeter Isolator ermöglicht die Zusammenführung des Kühlmitteldampfs auf dem Strömungsweg zwischen mindestens zwei Verdampfern und einem Kondensator oder gegebenenfalls auch mehr als einem Kondensator. Die Anzahl an Bauteilen, wie Isolatoren, Kühlmitteldampfanschlüsse, Kühlmittelanschlüsse, Kondensatoren und Leitungsabschnitten ist dadurch erheblich reduzierbar. Daher werden die Kosten der Kühlvorrichtung wesentlich gesenkt und infolge reduzierter Leckagewahrscheinlichkeit deren Betriebssicherheit beachtlich erhöht. Zugleich werden auch noch die Montage und Wartung der Kühlvorrichtung erleichtert.

Bei besonders herstellungsfreundlichen Ausführungsformen des Isolators sind die beiden Anschlüssstücke am oberen und unteren Ende der Isolierstrecke aus Metall gefertigt . Je nach Einsatzbedingungen kann das Metall Aluminum, Kupfer, Stahl (inkl. rostfreier Stahl) oder Legierungen davon, aber auch nichtmetallische Werksstoffe beinhalten. Zur dielektrischen Optimierung sind dabei die von aussen in den ersten oder zweiten Isolierkanal geführten Enden der Anschlüsse jeweils als Feldsteuerelektroden ausgebildet.

Bei komplexeren Kühlsystemen ist mindestens das erste Anschlussstück oder das zweite Anschlussstück als Verzweigungsstücke mit einer Mehrzahl von Kühlmitteldampfanschlüssen beziehungsweise einer Mehrzahl von Kühlmittelanschlüssen ausgeführt. Das erste Anschlussstück kann etwa mindestens einen gewinkelt ausgebildeten Leitungszusammenschluss aufweisen, in den zwei Kühlmitteldampfanschlüsse integriert sind.

Bei Bedarf weist das erste Anschlussstück mindestens eine gewinkelt ausgebildete Leitungsverzweigung auf, beispielsweise eine Y-förmige Geometrie, in welcher die zwei Kühlmittelanschlüsse in die Leitungsverzweigung integriert sind.

Sofern sich die Kühlvorrichtung nicht mit einem einzigen Verdampfer realisieren lässt, kann der Verdampfer eine Gruppe von mindestens zwei Teilverdampfern mit jeweils mindestens zwei Anschlüssen enthalten. Der Begriff ,Verdampfer' wird in diesem Fall als Gesamtverdampfer verstanden. Dabei bildet ein erster Anschluss der beiden Anschlüsse eines ersten Teilverdampfers der mindestens zwei Teilverdampfer den Kühlmitteleingang des (Gesamt-)Verdampfers bildet, während ein erster Anschluss der mindestens zwei Anschlüsse eines zweiten Teilverdampfers der mindestens zwei Teilverdampfer den Kühlmitteldampfausgang des (Gesamt-)Verdampfers bildet und ein zweiter Anschluss des ersten Teilverdampfers mit einem zweiten Anschluss des zweiten Teilverdampfers oder mit einem Anschlüsse eines dritten Teilverdampfer der Gruppe verbunden ist.

Wenn beispielsweise die Kühleffizient der Umgebungsluft im Betrieb des Generatorschalters unbefriedigend ist, kann der Kondensator als Wärmetauscher ausgebildet sein und kann zwei durch eine thermisch leitende Wand voneinander getrennte Räume aufweisen, von denen ein erster Raum der beiden Räume Teil eines Primärkreises für das Kühlmittel und den Kühlmitteldampf ist und mit dem Kühlmittelausgang und dem Kühlmitteldampfeingang des Kondensators kommuniziert, während der zweite Raum Teil eines Sekundärkreises für ein wärmespeicherndes Fluid ist und zwei mit einem Wärmeverbraucher verbindbare Fluidanschlüsse aufweist. Ein in den Wärmetauscher integrierter Sekundärkreis ermöglicht eine Regulierung des thermischen Widerstands der Kühlvorrichtung unabhängig zur Umgebungstemperatur. Der zu kühlende Stromleiter kann daher in einfacher Weise unterhalb einer definierten Grenztemperatur gehalten werden. Der Sekundärkühlkreis kann beispielsweise mit einem von einem Ventilator erzwungenen Luftstrom oder einem zweiten Kältemittelkühlkreislauf realisiert sein. Dieser zweite Kältemittelkühlkreislauf kann beispielsweise mit einer Flüssigkeitskühlung, etwa Brauchwasser realisiert sein.

Sofern es erforderlich sein sollte, den Primärkühlkreis auch elektrisch vom Sekundärkühlkreis zu trennen, kann die thermisch leitende Wand elektrisch isolierend ausgebildet sein.

Da der Pegelstand des Kühlmittels im Leitungssystem bei ruhender Kühlvorrichtung entscheidend für die Betriebssicherheit des Generatorschalters ist, ist es vorteilhaft, wenn die Kühlvorrichtung einen Sensor zur Erfassung des Pegels oder zumindest eines vordefinierten Mindestpegelstandes des Kühlmittels (4) in flüssigem Zustand - also des verflüssigten Kühlmittels - aufweist.

Um eine Ferndiagnose oder Fernüberwachung des Generatorschalters vornehmen zu können, ist es vorteilhaft, wenn der Sensor eine Netzwerkschnittstelle zur Einbindung in ein Datennetzwerk aufweist. Damit ist der Sensor operativ derart in das Datennetzwerk einbindbar, dass er zumindest eine der folgenden Funktionen wahrnehmen kann:
a) ein Senden einer Statusinformation des Sensors an das Datennetzwerk;
b) ein Ausführen eines Befehls vom Datennetzwerk.

Dabei ist das Datennetzwerk insbesondere ein LAN (local area network), ein WAN (wide area network) oder das Internet. Das Datennetzwerk, insbesondere ein globales Datennetzwerk, kann ein TCP/IP Netzwerk wie das Internet sein. Das Datennetzwerk kann bei Bedarf verteilte Speichereinheiten wie etwa eine Cloud (Datencloud) beinhalten. Dabei kann die Cloud eine öffentliche, eine private Cloud, eine hybride Cloud oder eine community cloud sein.

Unter der Funktion a) wird beispielsweise ein Senden eines Signals beim Erreichen eines vordefinierten Mindestpegelstandes und/oder weiterer vordefinierbarer Pegelstände des Kühlmittels verstanden. Unter der Funktion b) wird beispielsweise ein Ausschalten und Neustarten des Sensors (reset), Kalibrierungswerte, Betriebszustände (ein), Lebenszeichen usw. verstanden.

Eine solche Ausführungsform kann beispielsweise dazu eingesetzt werden, dass beim Unterschreiten des vordefinierten Mindestpegelstandes des Kühlmittels ein Alarm an das Datennetzwerk absendbar ist. Je nach Bedarf kann der Alarm bei einem Überwacher oder einer Überwachereinheit in Form eines Signals oder einer Nachricht eintreffen.

### KURZE BESCHREIBUNG DER ZEICHNUNGEN

Anhand von Zeichnungen werden nachfolgend Ausführungsbeispiele der Erfindung näher erläutert. Hierbei zeigt:
- Fig.1: eine stark vereinfacht dargestellte erste Ausführungsform eines Generatorschalters mit einer erfindungsgemässen Kühlvorrichtung während des Betriebs des Generatorschalters;
- Fig.2: die Kühlvorrichtung nach Fig.1 während des Betriebs und bei vollständiger Füllung mit einem flüssigen Kühlmittel;
- Fig.3: die Kühlvorrichtung nach Fig.1 bei Stillstand;
- Fig.4: die Kühlvorrichtung nach Fig.1 während des Betriebs und bei minimaler Kühlmittelfüllung;
- Fig.5: die Kühlvorrichtung nach Fig.1 bei Stillstand und bei minimaler Füllung mit dem Kühlmittel;
- Fig.6: eine zweite Ausführungsform der Kühlvorrichtung nach der Erfindung;
- Fig.7: eine dritte Ausführungsform der Kühlvorrichtung nach der Erfindung;
- Fig.8: eine Aufsicht auf einen ersten Schnitt durch einen Isolator der Kühlvorrichtung nach Fig.7;
- Fig.9: eine Aufsicht auf einen zweiten Schnitt durch den Isolator der Kühlvorrichtung nach Fig.7;
- Fig.10: eine Ansicht der Ausführungsform der Kühlvorrichtung nach Fig.1, bei der der Kondensator als Wärmetauscher mit einem Primärkreis und einem Sekundärkreis ausgebildet ist;
- Fig.11: eine Ansicht im Schnitt durch eine Ausführungsform des Wärmetauschers nach Fig.10, in die das Kühlmittelreservoir eingebaut ist, und
- Fig.12: eine Ansicht der Kühlvorrichtung nach Fig.5, welche zudem mit einem Sensor zur Erfassung des flüssigen Kühlmittelpegels versehen ist, so dass der Sensor mit einem Datennetzwerk kommunizieren kann.

### WEGE ZUR AUSFÜHRUNG DER ERFINDUNG

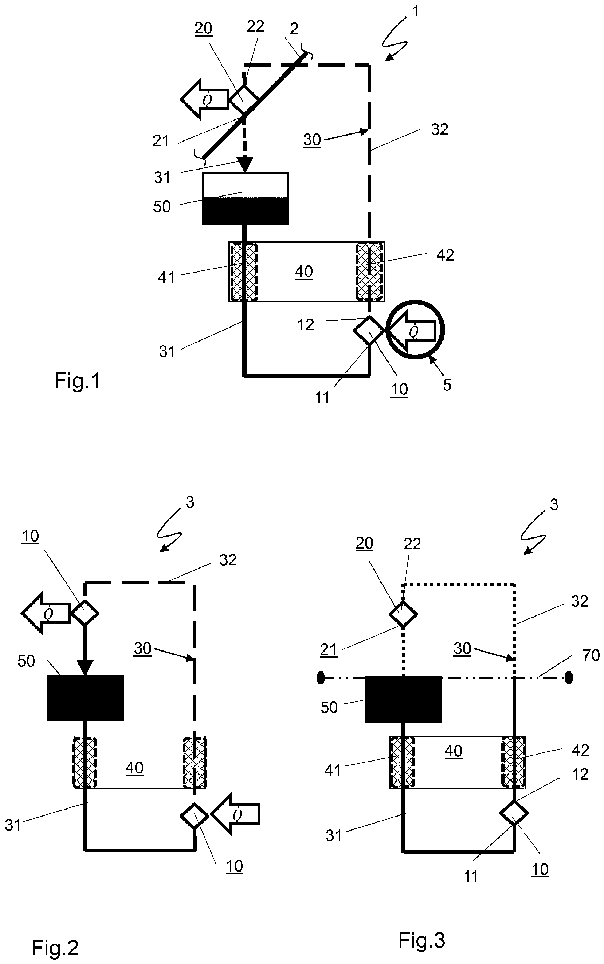

In allen Figuren beziehen sich gleiche Bezugszeichen auf gleiche oder zumindest gleich wirkende Teile. Die in den Figuren 1 bis 6 dargestellten ersten beiden Ausführungsformen eines Generatorschalters 1 mit einer Kühlvorrichtung 3 weisen jeweils einen auf Hochspannungspotential des Stromleiters 5 liegenden Verdampfer 10, einen auf Erdpotential und damit geerdeten Kapselung 2 (Gehäuse) des Generatorschalters 1 (nur in Fig.1 dargestellt) befestigten Kondensator 20 auf. Weiter weisen die in Fig.1 und Fig.2 gezeigten ersten beiden Ausführungsformen der Kühlvorrichtung jeweils ein Leitungssystem 30, einen mit Hochspannung belastbaren Isolator 40 und ein Kühlmittelreservoir 50 auf. Die Kühlvorrichtungen sind jeweils mit einem flüssigen Kühlmittel gefüllt. Als Kühlmittel wird ein Hydrofluorcarbon in Form von "R-245fa" der Fa. Honeywell eingesetzt.

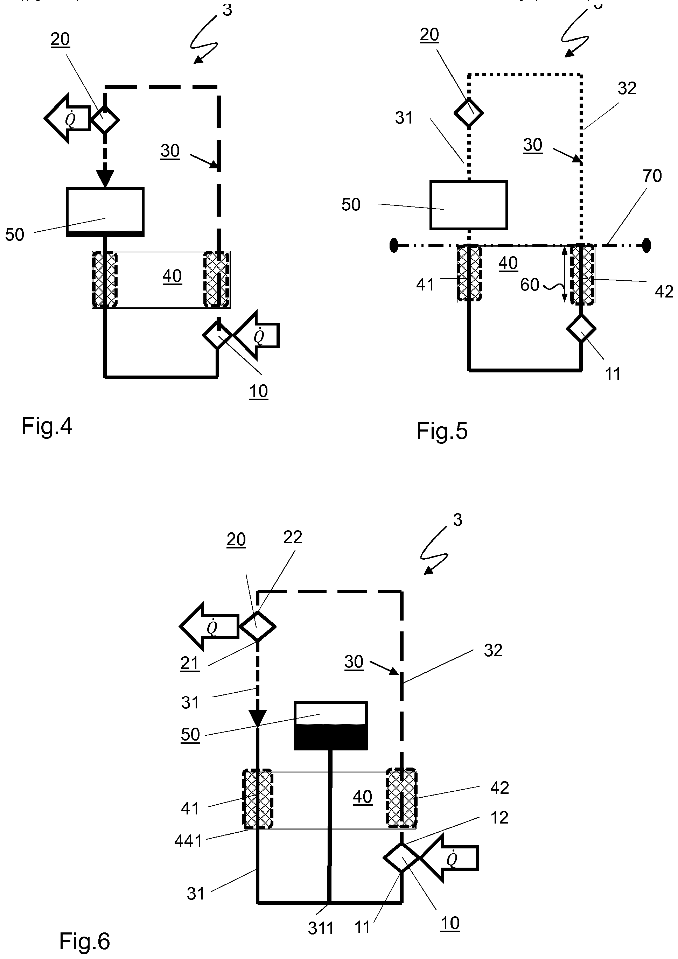

Bei jeder der beiden Ausführungsformen weist der Kondensator 20 einen Kühlmittelausgang 21 auf, der über einen das Kühlmittelreservoir 50 enthaltenden Kühlmittelleiter 31 des Leitungssystems 30 mit einem Kühlmitteleingang 11 des Verdampfers 10 verbunden ist. Ein Kühlmitteldampfausgang 12 des Verdampfers 10 ist über einen Kühlmitteldampfleiter 32 des Leitungssystems 30 mit einem Kühlmitteldampfeingang 22 des Kondensators 20 verbunden, so dass ein geschlossener Kühlkreislauf entsteht. In den Isolator 40 sind mit einem Abstand voneinander zwei Isolierkanäle 41 und 42 eingeformt. Der Isolierkanal 41 bildet einen Abschnitt des Kühlmittelleiters 31, während der Isolierkanal 42 einen Abschnitt des Kühlmitteldampfleiters 32 bildet. Die beiden Isolierkanäle 41 und 42 sind weitgehend parallel zueinander durch den Isolator 40 geführt und weisen in Strömungsrichtung des Kühlmittels respektive des Kühlmitteldampfes weitgehend gleiche Länge auf. Die beiden Isolierkanäle definieren jeweils eine von zwei Teilisolierstrecken des Isolators 40. Bedingt durch geringfügige Abweichungen im Design und durch die Aufnahme voneinander abweichender Phasen des Kühlmittels/Arbeitsmediums haben die beiden Teilisolierstrecken im unterschiedliche Anforderungen betreffend der dielektrischen Festigkeit. Die Teilisolierstrecke mit der geringeren dielektrischen Festigkeit bestimmt letztlich die dielektrischen Eigenschaften des ganzen Isolators 40. Diese Teilisolierstrecke wird daher als Isolierstrecke des Isolators 40 bezeichnet und ist in den Figuren 5, 8 und 9 dargestellt und mit dem Bezugszeichen 60 gekennzeichnet. Der Isolator ist einstückig ausgebildet und aus Epoxidharz gefertigt.

Beim Betrieb der Kühlvorrichtung befindet sich der Verdampfer 10 in thermisch und elektrisch leitendem Kontakt mit einem in Fig.1 dargestellten mit Hochspannung und hohen Strömen belasteten Stromleiter L. Die liegt bei einigen 10 kV bei Nennströmen in der Grössenordnung von mehreren 10 kA. Daher liegt der Verdampfer 10 auf Hochspannungspotential. Der Kondensator 20 befindet sich hingegen auf Erdpotential oder höchstens auf einem gegenüber dem Verdampfer 10 um mindestens eine Grössenordnung niedrigeren Potential, von höchstens einigen kV. An der Isolierstrecke 60 des Isolators 40 fällt daher weitgehend die gesamte Hochspannung ab.

Beim Führen von Nennstrom erwärmt sich der Stromleiter 5 infolge ohmscher Verluste, des Skin-Effekts und weiterer Faktoren und gibt diese durch einen Pfeil Q gekennzeichnete Verlustwärme an den Verdampfer 10 ab. Im Verdampfer 10 wird die Verlustwärme auf das flüssige Kühlmittel übertragen, worauf es verdampft und Kühlmitteldampf erzeugt. Der Kühlmitteldampf (in allen Figuren grob gestrichelt dargestellt) wird über den Kühlmitteldampfleiter 32 zum Kondensator 20 geführt. Im Kondensator 20 wird der Kühlmitteldampf verflüssigt. Das verflüssigte Kühlmittel (in allen Figuren feiner gestrichelt dargestellt) läuft ins Kühlmittelreservoir 50, in dem es gesammelt wird. Vom Kühlmittelreservoir 50 wird das flüssige Kühlmittel durch den Kühlmittelleiter 31 zum Verdampfer 10 zurückgeführt (in allen Figuren unstrichliert, das heisst mit einer durchgehenden Strichlinie dargestellt), wodurch ein Zyklus eines Kühlmittelkreislaufs abgeschlossen wird und von neuem beginnt. Um die Darstellung der Kühlvorrichtung möglichst übersichtlich zu halten, ist in fast allen Figuren auf die Darstellung der Rohrwandungen/Leitungswandungen des Leitungssystems 30 verzichtet worden.

Die Kühlvorrichtung ist derart ausgebildet, dass sich der Kondensator 20 und das Kühlmittelreservoir 50 auf einem höheren Niveau, also in vertikaler Richtung gesehen oberhalb befinden als der Verdampfer 10. Dadurch ist sichergestellt, dass das flüssige Kühlmittel durch Gravitation in den Verdampfer 10 gelangt. Aus allen Figuren ist ersichtlich, dass beim Zirkulieren der Kühlmitteldampf durch den Isolierkanal 42 und das flüssige, kondensierte Kühlmittel durch den Isolierkanal 41 geführt werden. Da das flüssige Kühlmittel einen hohen spezifischen Widerstand aufweist, zeichnet sich die vom kühlmittelgefüllten Isolierkanal 41 bestimmte Teilisolierstrecke des Isolators durch eine hohe dielektrische Festigkeit aus. Da der Druck des Kühlmitteldampfs bei Betrieb der Kühlvorrichtung wegen der hohen Dampftemperatur hoch ist, ist die dielektrische Festigkeit der durch den kühlmitteldampfgefüllten Isolierkanal 42 bestimmten Teilisolierstrecke ebenfalls hoch. Diese günstigen Bedingungen sind bei Betrieb der Kühlvorrichtung gewährleistet solange der Verdampfer 10 mit flüssigem Kühlmittel geflutet wird (Figuren 1, 2, 4, 6 und 7).

Bei Stillstand der Kühlvorrichtung liegen jedoch andere Bedingungen vor. Bei Stillstand ist zwar der Strom im Stromleiter unterbrochen, aber der Isolator 40 kann weiterhin mit Hochspannung belastet sein. Ist das Kühlmittelreservoir 50 vollständig gefüllt (Figuren 2 und 3), so liegt der in Fig.3 bezeichnete Pegel 70 des flüssigen Kühlmittels mit Sicherheit über dem Niveau des Isolators 40 respektive der beiden Isolierkanäle 41 und 42, welche dann vollständig mit flüssigem Kühlmittel gefüllt sind.

Befindet sich hingegen bloss eine vergleichsweise geringe Menge an flüssigen Kühlmittel in der Kühlvorrichtung (Figuren 4 und 5), so sinkt der Pegel 70 ebenfalls stark. Bei Stillstand der Kühlvorrichtung weist das flüssige Kühlmittel eine Temperatur auf, die weit unterhalb der Temperatur liegt, die bei Nennstrombelastung auftritt. Der kalte Kühlmitteldampf befindet sich in allen frei von flüssigen Kühlmittel gehaltenen Abschnitten der Kühlmittelleitung 31 und der Kühlmitteldampfleitung 32 und ist in Fig.5 gepunktet/punktiert dargestellt. Wegen der geringen, an die Umgebungstemperatur angepassten Kühlmitteltemperatur wirkt in den Leitungen 31 und 32 lediglich der Sättigungsdampfdruck des Kühlmittels. Je nach Umgebung kann dieser Druck sehr gering sein. Würde der Pegel 70 der Kühlflüssigkeit unter dem Niveau der Isolierstrecke 60 liegen, so würde sich gesättigter Kühlmitteldampf mit geringem Dampfdruck in einem der beiden Isolierkanäle 41, 42 befinden, was nach dem Gesetz von Paschen schon bei vergleichsweise geringer Spannung zu einem dielektrischen Versagen der Isolierstrecke 60 führen könnte. Dies gilt es zu vermeiden. Daher wird der Pegel 70 des flüssigen Kühlmittels, insbesondere bei Stillstand, überwacht. So ist sicherstellt, dass der Pegel 70 des flüssigen Kühlmittels 4 im Leitungssystem 30 bei ruhender Kühlvorrichtung 3 stets mindestens so hoch ist, wie ein oberes Ende 61 der Isolierstrecke 60 im Isolator 40.

Bei der Ausführungsform der Kühlvorrichtung nach Fig.6 ist das Kühlmittelreservoir 50 im Betrieb auf Hochspannungspotential gelegt. Mit anderen Worten gesagt, ist bei dieser Ausführungsform das Kühlmittelreservoir 50 mit dem Stromleiter 5 verbunden, beispielsweise direkt an ihm befestigt, so dass ein optimaler thermischer Übergang vom Stromleiter 5 zum Verdampfer 10 realisiert ist. Dies wird mit einer im Kühlmittelleiter 31 angeordneten Leitungsverzweigung 311 erreicht, die zum einen einen Kühlmittelanschluss 441 des Isolators 40 mit dem Kühlmitteleingang 11 des Verdampfers verbindet und zum anderen einen Leitungszweig aufweist, der mit dem Kühlmittelreservoir 50 kommuniziert. Selbstverständlich ist es dabei nicht erforderlich, dass die Zuleitung von der Leitungsverzweigung 311 zum Kühlmittelreservoir 50 durch den Isolator 40 hindurch erfolgen muss. Dies wurde in Fig.6 lediglich zugunsten einer besseren Übersichtlichkeit schematisch so dargestellt.

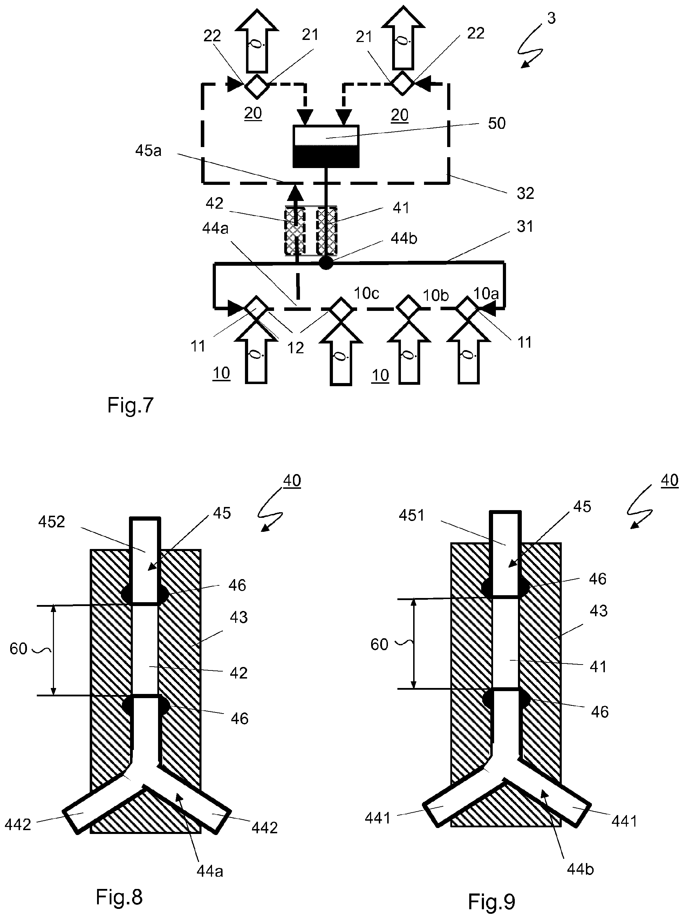

Die in Fig.7 darstellte dritte Ausführungsform der Kühlvorrichtung nach der Erfindung ist entsprechend den ersten beiden Ausführungsformen aufgebaut, weist jedoch anstelle nur eines Verdampfers zwei Verdampfer 10 und anstelle nur eines Kondensators zwei Kondensatoren 20 auf. Wie aus Fig.7 hervorgeht weist der Rechte dieser beiden Verdampfer eine Gruppe von drei in Serie geschalteten Teilverdampfern 10a, 10b, 10c auf. Von diesen Teilverdampfern bildet der Teilverdampfer 10a den Kühlmitteleingang 11 und der Teilverdampfer 10c den Kühlmitteldampfausgang 12 dieses Verdampfers. Bei dieser Ausführungsform der Kühlvorrichtung nach der Erfindung sind die Kühlmitteldampfausgänge 12 der beiden Verdampfer 10 mit einem Leitungszusammenschluss 44a verbunden, der zwei aus Fig.8 ersichtliche Kühlmitteldampfanschlüsse 442 des Isolators 40 enthält. Der Leitungszusammenschluss 44a ist in den Isolierkanal 42 geführt, der seinerseits mit einer Leitungsverzweigung 45a des Kühlmitteldampfleiters 32 verbunden ist, deren beide Abzweige jeweils mit einem der beiden Kühlmitteldampfeingänge 22 der beiden Kondensatoren 20 verbunden sind. Die beiden Kühlmittelausgänge 21 der beiden Kondensatoren 20 sind mit dem als Leitungszusammenschluss und Sammelraum wirkenden Kühlmittelreservoir 50 verbunden. Der Ausgang des Kühlmittelreservoirs 50 kommuniziert über den Isolierkanal 41 mit einer Leitungsverzweigung 44b des Kühlmittelleiters 31, deren beide Abzweige jeweils an einen der beiden Kühlmitteleingänge 11 der beiden Verdampfer 10 geführt sind.

Wegen der Vielzahl an Teilverdampfern 10a, 10b, 10c und wegen des über die Kühlmittelleitung 31 direkt in den Verdampfer 10 eingespeisten flüssigen Kühlmittels und wegen des in der Kühlmitteldampfleitung 32 ohne Wechselwirkung mit dem kondensierten, flüssigen Kühlmittel erfolgenden Wegführens des Kühlmitteldampfes zeichnet sich ein solcher Verdampfer durch einen besonders hohen Wirkungsgrad aus.

Bei dieser Ausführungsform der Kühlvorrichtung nach der Erfindung führt das Leitungssystem mit dem Kühlmittelleiter 31 und dem Kühlmitteldampfleiter 32 eine besonders grosse Menge an Kühlmittel. Um bei dieser wie auch allen anderen Ausführungsform der Kühlvorrichtung die Leistungsfähigkeit hochzuhalten, ist der Strömungsquerschnitt des Kühlmittelleiters 31 daher mit Vorteil kleiner bemessen als der Strömungsquerschnitt des Kühlmitteldampfleiters 32.

Fig.8 zeigt einen Schnitt durch eine vereinfacht dargestellte Ausführungsform des Isolators 40, wobei der Schnitt längs entlang dem Isolierkanal 42 geführt ist. Wie aus Fig.8 hervorgeht weist der der Isolator 40 einen polymeren, gegebenenfalls füllstoff- oder faserverstärkten Isolierkörper auf, welcher beispielsweise aus einem Giessharz gefertigt ist. Alternativ dazu weist der Isolator 40 einen keramischen Isolierkörper 43 auf. Wie aus Fig.8 hervorgeht sind der Isolierkanal 42 sowie zwei Anschlussstücke 44 und 45 in den Isolierkörper eingeformt. Das Anschlussstück 44 ist auf dem Stromleiter fixierbar und enthält zwei auf Hochspannungspotential führbare, mit dem Isolierkanal 42 fluidisch kommunizierende Kühlmitteldampfanschlüsse 442, welche Teil des hier aus strömungstechnischen Gründen gewinkelt ausgeführten Leitungszusammenschlusses 44a sind. Das Anschlussstück 45 ist mit dem Kondensator 20 verbunden und weist einen auf Erdpotential führbaren und mit dem Isolierkanal 42 fluidisch kommunizierenden Kühlmitteldampfanschluss 452 auf. Dieser Kühlmitteldampfanschluss 452ist in der Fig.8 zwar nicht wie der Leitungszusammenschluss 44a in gewinkelter Ausführung dargestellt, aber dennoch so ausgeführt, so dass er in der gewinkelt ausgebildeten Leitungsverzweigung 45a einsetzbar ist.

Der in Fig.9 dargestellte Isolator 40 ist entsprechend dem in Fig.8 dargestellten Isolator 40 gestaltet Dementsprechend sind in den Isolierkörper 43 der Isolierkanal 41 und zwei im Anschlussstück 44 vorgesehene Kühlmittelanschlüsse 441 eingeformt. Im Unterschied zum Isolator 40 gemäss Fig.8 ist als Anschlussstück 45 ein mit dem Kühlmittelreservoir 50 verbundener, als unverzweigter Leitungsabschnitt ausgebildeter Kühlmittelanschluss 451 vorgesehen.

Bei einer Kühlvorrichtung mit nur einem Verdampfer 10 ist anstelle von zwei Kühlmitteldampfanschlüssen 442 lediglich ein Kühlmitteldampfanschluss vorgesehen, wie dies bei den Ausführungsformen nach den Figuren 1 bis 6 der Fall ist.

Die vorgenannten Isolatoranschlüsse sind im Allgemeinen aus Metall gefertigt und sind jeweils von aussen in die Isolierkanäle 41 und 42 geführt. Die in die Isolierkanäle geführten Enden der Anschlüsse, z.B. des Kühlmitteldampfanschlusses 452, sind jeweils als Feldsteuerelektrode 46 ausgebildet.

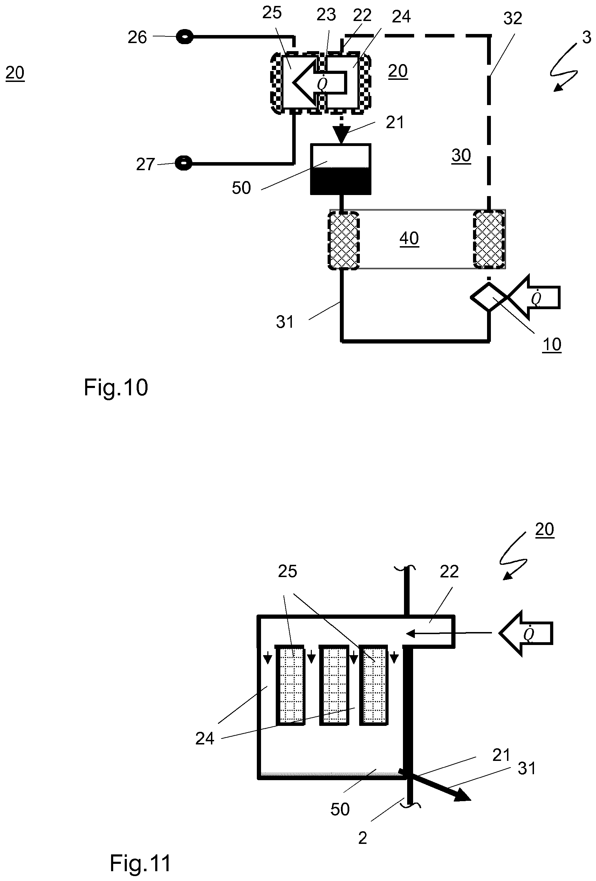

Aus Fig.10 geht hervor, dass der Kondensator 20 als Wärmetauscher ausgebildet sein kann und zwei durch eine thermisch leitende Wand 23 voneinander getrennte Räume 24, 25 aufweist. Der erste Raum 24 ist Teil eines Primärkreises für das Kühlmittel und den Kühlmitteldampf und kommuniziert mit dem Kühlmittelausgang 21 und dem Kühlmitteldampfeingang 22 des Kondensators 20. Der zweite Raum hingegen ist Teil eines Sekundärkreises für ein wärmespeicherndes Fluid und weist zwei mit einem Wärmeverbraucher verbindbare Anschlüsse 26, 27 auf.

Eine solche Kühlvorrichtung zeichnet sich durch hohe dielektrische Sicherheit, chemische Stabilität und eine geringe Leckagerate aus. Ferner ist sie weitgehend wartungsfrei und weist einen geringen thermischen Widerstand auf. Zugleich kann sie in einem breit gefächerten Temperaturbereich eingesetzt werden und ist lediglich abhängig von den Eigenschaften des flüssigen Kühlmittels im Primärkreis. Die Kühlvorrichtung ist ferner unabhängig von Umluft und zeichnet sich durch eine hohe Wärmeabfuhr respektive Kühlleistung aus. Dies ermöglicht zudem einen modularen Aufbau der Kühlvorrichtung und gewährleistet eine effektive Nutzung der Abwärme in einem OCR-Kreislauf, einer Heizung oder einem chemischen Prozess.

Die Betriebssicherheit einer solchen Kühlvorrichtung kann zusätzlich erhöht werden, wenn die thermisch leitende Wand 23 elektrisch isolierend ausgebildet ist.

In Fig. 11 ist ein beispielhafter konstruktiver Aufbau eines als Wärmetauschers ausgebildeten Kondensators 20 dargestellt. Aus Fig.11 geht hervor, dass der Wärmetauscher an einer leicht zugänglichen Aussenseite der Kapselung 2 angebracht ist. Über den Kühlmitteldampfanschluss 22 strömt bei Betrieb der Kühlmittelvorrichtung Kühlmitteldampf in den Raum 24 ein, der an thermisch leitend ausgebildeten Wänden von Wärmeübertragungselementen des Sekundärkreislaufs kondensiert. Die beim Kondensieren abgegebene Verlustwärme Q wird an einen durch den Raum 25 strömenden Wärmeträger eines Sekundärkreises, typischerweise Wasser oder Öl, übertragen und durch die Kapselung 2 hindurch an einen Verbraucher abgegeben (in Fig.11 nicht näher dargestellt). Die durch den Wärmeträger erzielte Kühlleistung kann so geregelt werden, dass der zu kühlende Stromleiter unabhängig von Störgrössen, wie den Umgebungsbedingungen, auf einer vorgegebenen Solltemperatur gehalten wird.

Das kondensierte Kühlmittel wird in dem in den Wärmetauscher integrierten Kühlmittelreservoir 50 gesammelt und durch die Kapselung hindurch in den Kühlmittelkreislauf eingespiesen.

Da der Wärmetauscher aussen an der Kapselung 2 angebracht ist, kann er leicht in die Kühlvorrichtung eingebaut und auch leicht wieder demontiert werden.

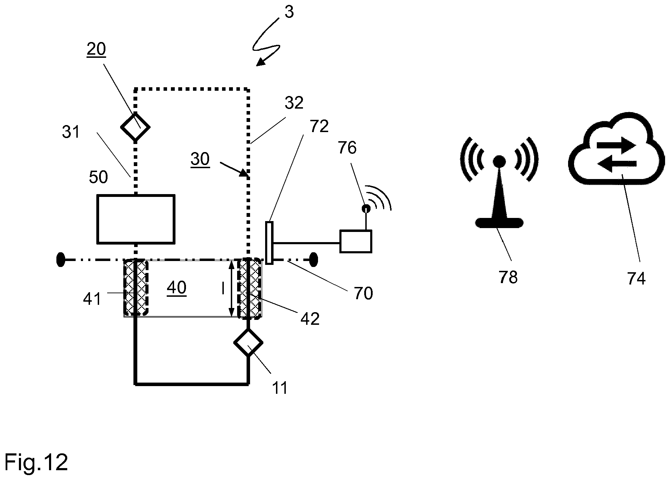

Die in Fig.12 dargestellte Ansicht der Kühlvorrichtung basiert auf der ersten Ausführungsform, welche auch in Bezug auf die Fig.5 weiter oben in dieser Beschreibung erklärt ist. In der Folge wird nachfolgend lediglich noch auf die Unterschiede der in Fig.12 gezeigten Ausführungsform zur in Fig.5 gezeigten Ausführungsform erläutert.

Da der Pegelstand des Kühlmittels im Leitungssystem bei ruhender Kühlvorrichtung entscheidend für die Betriebssicherheit des Generatorschalters ist, weist die Kühlvorrichtung 3 einen Sensor 72 zur Erfassung des Pegels 70 oder zumindest eines vordefinierten Mindestpegelstandes des Kühlmittels 4 in flüssigem Zustand auf. Der Sensor 72 hat eine Netzwerkschnittstelle und ist über diese mit einem Sender/Empfänger 76 verbunden, so dass der Sensor 72 über ein Übertragungsnetz 78 mit einem internetbasiertes, eine Cloud beinhaltendes Datennetzwerk 74 kommunizieren kann. Beim Unterschreiten des vordefinierten Mindestpegelstandes des Kühlmittels 4 in der Kühlvorrichtung 3 wird damit ein signalförmiger Alarm an das Datennetzwerk abgesandt.

Obwohl die oben genannte Ausführungsform im Zusammenhang mit Fig.12 erklärt worden ist, ist sie sinngemäss für alle in dieser Schrift offenbarten Ausführungsformen ebenso anwendbar.

### BEZUGSZEICHENLISTE

- 1: Generatorschalter
- 2: Kapselung, Gehäuse des Generatorschalters
- 3: Kühlvorrichtung
- 4: Kühlmittel
- 5: Stromleiter (auf Hochspannungspotential)
- 10: Verdampfer
- 10a, 10b, 10c: Teilverdampfer
- 11: Kühlmitteleingang
- 12: Kühlmitteldampfausgang
- 20: Kondensator
- 21: Kühlmittelausgang
- 22: Kühlmitteldampfeingang
- 23: thermisch leitende Wand
- 24, 25: Räume
- 26, 27: Anschlüsse
- 30: Leitungssystem
- 31: Kühlmittelleiter
- 311: Leitungsverzweigung
- 32: Kühlmitteldampfleiter
- 40: Isolator
- 41, 42: Isolierkanäle
- 43: Isolierkörper
- 44,45: Anschlussstücke
- 44a: Leitungszusammenschluss
- 44b, 45a: Leitungsverzweigung
- 441: Kühlmittelanschluss
- 442: Kühlmitteldampfanschluss
- 451: Kühlmittelanschluss
- 452: Kühlmitteldampfanschluss
- 46: Feldsteuerelektrode
- 50: Kühlmittelreservoir
- 60: Isolierstrecke
- 61: oberes Ende der Isolierstrecke
- 70: Pegel des Kühlmittels
- 72: Sensor, Niveausensor
- 74: Datennetzwerk
- 76: Sender/Empfänger
- 78: Übertragungsnetz
- Q: Verlustwärme

## Patentansprüche

1. Generatorschalter (1), umfassend
eine Kapselung (2), welche im Betrieb des Generatorschalters (1) auf Erdpotential liegt, einen innerhalb der Kapselung (2) elektrisch isoliert angeordneter Stromleiter (5), der im Betrieb des Generatorschalters (1) auf Hochspannungspotential liegt, eine gravitationsgetriebe Kühlvorrichtung (3) mit einem Verdampfer (10) und einem oberhalb des Verdampfers (10) angeordneten Kondensator (20) und einem Kühlmittel (4), wobei
der Verdampfer (10) wärmeleitend mit dem Stromleiter (5) verbunden ist und damit im Betrieb des Generatorschalters (1) auf Hochspannungspotential liegt, und wobei der Kondensator (20) mit der Kapselung (2) verbunden ist und damit im Betrieb des Generatorschalters (1) auf Erdpotential liegt,
der Verdampfer (10) mit dem Kondensator (20) über ein Leitungssystem (30) mit einem Isolator (40) verbunden ist, so dass im Betrieb des Generatorschalters (1) Kühlmitteldampf vom Verdampfer (10) zum Kondensator (20) und flüssiges Kühlmittel vom Kondensator (20) zum Verdampfer (10) führbar ist,
der Isolator (40) eine Isolierstrecke (60) mit einem oberen Ende (61) aufweist,
das Leitungssystem (30) einen Kühlmittelleiter (31) aufweist, welcher einen Kühlmittelausgang (21) des Kondensators (20) mit einem Kühlmitteleingang (11) des Verdampfers (10) verbindet und weiter einen Kühlmitteldampfleiter (32) aufweist, welcher einen Kühlmitteldampfausgang (12) des Verdampfers (10) mit einem Kühlmitteldampfeingang (22) des Kondensators (20) verbindet, derart dass ein geschlossener Kühlkreislauf gebildet ist, **dadurch gekennzeichnet, dass** der geschlossene Kühlkreislauf ringförmig gebildet ist,
im Betrieb des Generatorschalters (1) ein Pegel (70) des flüssigen Kühlmittels (4) im Leitungssystem (30) bei ruhender Kühlvorrichtung (3) mindestens so hoch ist, wie das obere Ende (61) der Isolierstrecke (60) im Isolator (40),
der Isolator (40) einen als ersten Isolierkanal (41) ausgebildeten Abschnitt des Kühlmittelleiters (31) und einen als zweiten Isolierkanal (42) ausgebildeten Abschnitt des Kühlmitteldampfleiters (32) aufweist, und
der Isolator (40) einen die beiden Isolierkanäle (41, 42) aufnehmenden Isolierkörper (43) und pro Isolierkanal (41, 42) je ein mit dem Stromleiter (5) verbundenes erstes Anschlussstück (44) und ein mit dem Kondensator (20) verbundenes zweites Anschlussstück (45) aufweist.

2. Generatorschalter (1) nach dem vorhergehenden Anspruch, wobei der Kühlmitteldampfleiter (32) gegenüber dem Kühlmittelleiter (31) thermisch isoliert ausgeführt ist.

3. Generatorschalter (1) nach einem der vorhergehenden Ansprüche, mit einem Kühlmittelreservoir (50), wobei das Kühlmittelreservoir (50) im Kondensator (20) angeordnet ist.

4. Generatorschalter (1) nach einem der vorhergehenden Ansprüche 1 bis 2, mit einem Kühlmittelreservoir (50), wobei das Kühlmittelreservoir (50) im Kühlmittelleiter (31) angeordnet ist.

5. Generatorschalter (1) nach einem der vorhergehenden Ansprüche 1 bis 2, mit einem Kühlmittelreservoir (50), wobei das Kühlmittelreservoir (50) mit dem Stromleiter (5) verbunden ist, so dass das Kühlmittelreservoir (50) auf dem Hochspannungspotential des Stromleiters (5) ist.

6. Generatorschalter (1) nach einem der vorhergehenden Ansprüche, wobei das erste Anschlussstück (44) am unteren Ende der Isolierstrecke (60) und das zweite Anschlussstück (45) am oberen Ende der Isolierstrecke (60) angeordnet und aus Metall gefertigt sind, und ihre von aussen in den ersten oder zweiten Isolierkanal (41, 42) geführten Enden jeweils als Feldsteuerelektroden (46) ausgebildet sind.

7. Generatorschalter (1) nach einem der vorhergehenden Ansprüche, wobei mindestens das erste Anschlussstück (44) oder das zweite Anschlussstück (45) als Verzweigungsstücke (44a, 44b) mit einer Mehrzahl von Kühlmitteldampfanschlüssen (442) beziehungsweise einer Mehrzahl von Kühlmittelanschlüssen (441) ausgeführt sind.

8. Generatorschalter (1) nach einem der vorhergehenden Ansprüche, wobei der Verdampfer (10) eine Gruppe von mindestens zwei Teilverdampfern (10a, 10b, 10c) mit jeweils mindestens zwei Anschlüssen enthält, wobei ein erster Anschluss der beiden Anschlüsse eines ersten Teilverdampfers (10a) der Gruppe von Teilverdampfern den Kühlmitteleingang (11) des Verdampfers (10) bildet, wobei ein erster Anschluss der mindestens zwei Anschlüsse eines zweiten Teilverdampfers (10c) der Gruppe der Teilverdampfer den Kühlmitteldampfausgang (12) des Verdampfers (10) bildet, und wobei ein zweiter Anschluss des ersten Teilverdampfers (10a) mit einem zweiten Anschluss des zweiten Teilverdampfers (10c) oder mit einem Anschlüsse eines dritten Teilverdampfers (10b) der Gruppe der Teilverdampfer verbunden ist.

9. Generatorschalter (1) nach einem der vorhergehenden Ansprüche, wobei der Kondensator (20) als Wärmetauscher ausgebildet ist und zwei durch eine thermisch leitende Wand (23) voneinander getrennte Räume (24, 25) aufweist, von denen ein erster Raum (24) der beiden Räume (24, 25) Teil eines Primärkreises für das Kühlmittel und den Kühlmitteldampf ist und mit dem Kühlmittelausgang (21) und dem Kühlmitteldampfeingang (22) des Kondensators (20) kommuniziert während der zweite Raum (25) der beiden Räume (24, 25) Teil eines Sekundärkreises für ein wärmespeicherndes Fluid ist und zwei mit einem Wärmeverbraucher verbindbare Fluidanschlüsse (26, 27) aufweist.

10. Generatorschalter (1) nach dem vorhergehenden Anspruch, wobei die thermisch leitende Wand (23) elektrisch isolierend ausgebildet ist.

11. Generatorschalter (1) nach einem der vorhergehenden Ansprüche, wobei die Kühlvorrichtung (3) einen Sensor (72) zur Erfassung des Pegels (70) oder zumindest eines vordefinierten Mindestpegelstandes des Kühlmittels (4) in flüssigem Zustand ausweist.

12. Generatorschalter (1) nach dem vorhergehenden Anspruch, wobei der Sensor (72) eine Netzwerkschnittstelle zur Einbindung in ein Datennetzwerk (74) aufweist, so dass der Sensor (72) operativ derart in das Datennetzwerk einbindbar ist, dass er zumindest eine der folgenden Funktionen wahrnehmen kann:
a) ein Senden einer Statusinformation des Sensors (72) an das Datennetzwerk (74);
b) ein Ausführen eines Befehls vom Datennetzwerk (74); wobei das Datennetzwerk (74) insbesondere ein LAN, ein WAN oder das Internet ist.

13. Generatorschalter (1) nach dem vorhergehenden Anspruch, wobei beim Unterschreiten des vordefinierten Mindestpegelstandes des Kühlmittels ein Alarm an das Datennetzwerk (74) absendbar ist.

## Claims

1. Generator switch (1), comprising
an encapsulation (2), which is at earth potential when the generator switch (1) is in operation, an electrical conductor (5), which is arranged in an electrically insulated manner inside the encapsulation (2) and is at high-voltage potential when the generator switch (1) is in operation, a gravity-driven cooling device (3) having an evaporator (10) and a condenser (20) arranged above the evaporator (10) and a coolant (4), wherein
the evaporator (10) is thermally conductively connected to the electrical conductor (5) and is therefore at high-voltage potential when the generator switch (1) is in operation, and wherein the condenser (20) is connected to the encapsulation (2) and is therefore at earth potential when the generator switch (1) is in operation, the evaporator (10) is connected to the condenser (20) by way of a line system (30) having an insulator (40), so that, when the generator switch (1) is in operation, coolant vapour can be conveyed from the evaporator (10) to the condenser (20) and liquid coolant can be conveyed from the condenser (20) to the evaporator (10),
the insulator (40) has an insulating section (60) with an upper end (61),
the line system (30) has a coolant line (31), which connects a coolant outlet (21) of the condenser (20) to a coolant inlet (11) of the evaporator (10), and furthermore has a coolant vapour line (32), which connects a coolant vapour outlet (12) of the evaporator (10) to a coolant vapour inlet (22) of the condenser (20), in such a way that a closed cooling circuit is formed, **characterized in that** the closed cooling circuit is formed in the form of a ring,
when the generator switch (1) is in operation, a level (70) of the liquid coolant (4) in the line system (30), when the cooling device (3) is inoperative, is at least as high as the upper end (61) of the insulating section (60) in the insulator (40),
the insulator (40) has a portion of the coolant line (31) configured as a first insulating channel (41) and a portion of the coolant vapour line (32) configured as a second insulating channel (42), and
the insulator (40) has an insulating body (43) that receives the two insulating channels (41, 42) and, for each insulating channel (41, 42), has a first connecting piece (44) connected to the electrical conductor (5) and a second connecting piece (45) connected to the condenser (20) .

2. Generator switch (1) according to the preceding claim, wherein the coolant vapour line (32) is configured to be thermally insulated from the coolant line (31).

3. Generator switch (1) according to either of the preceding claims, having a coolant reservoir (50), wherein the coolant reservoir (50) is arranged in the condenser (20).

4. Generator switch (1) according to one of the preceding Claims 1 to 2, having a coolant reservoir (50), wherein the coolant reservoir (50) is arranged in the coolant line (31).

5. Generator switch (1) according to one of the preceding Claims 1 to 2, having a coolant reservoir (50), wherein the coolant reservoir (50) is connected to the electrical conductor (5), so that the coolant reservoir (50) is at the high-voltage potential of the electrical conductor (5).

6. Generator switch (1) according to one of the preceding claims, wherein the first connecting piece (44) is arranged at the lower end of the insulating section (60) and the second connecting piece (45) is arranged at the upper end of the insulating section (60) and said connecting pieces are made of metal and their ends that are led from the outside into the first or second insulating channel (41, 42) are respectively configured as field-control electrodes (46).

7. Generator switch (1) according to one of the preceding claims, wherein at least the first connecting piece (44) or the second connecting piece (45) are configured as bifurcating pieces (44a, 44b) having a plurality of coolant vapour connections (442) or a plurality of coolant connections (441), respectively.

8. Generator switch (1) according to one of the preceding claims, wherein the evaporator (10) contains a group of at least two evaporator components (10a, 10b, 10c), each with at least two connections, wherein a first connection of the two connections of a first evaporator component (10a) of the group of evaporator components forms the coolant inlet (11) of the evaporator (10), wherein a first connection of the at least two connections of a second evaporator component (10c) of the group of evaporator components forms the coolant vapour outlet (12) of the evaporator (10), and wherein a second connection of the first evaporator component (10a) is connected to a second connection of the second evaporator component (10c) or to a connection of a third evaporator component (10b) of the group of evaporator components.

9. Generator switch (1) according to one of the preceding claims, wherein the condenser (20) is configured as a heat exchanger and has two spaces (24, 25) separated from one another by a thermally conductive wall (23), of which a first space (24) of the two spaces (24, 25) is part of a primary circuit for the coolant and the coolant vapour and communicates with the coolant outlet (21) and the coolant vapour inlet (22) of the condenser (20), while the second space (25) of the two spaces (24, 25) is part of a secondary circuit for a heat-storing fluid and has two fluid connections (26, 27) that can be connected to a thermal load.

10. Generator switch (1) according to the preceding claim, wherein the thermally conductive wall (23) is configured to be electrically insulating.

11. Generator switch (1) according to one of the preceding claims, wherein the cooling device (3) has a sensor (72) for detecting the level (70) or at least a predefined minimum level of the coolant (4) in the liquid state.

12. Generator switch (1) according to the preceding claim, wherein the sensor (72) has a network interface for linking into a data network (74), so that the sensor (72) can be linked operatively into the data network in such a way that it can perform at least one of the following functions:
a) transmission of status information of the sensor (72) to the data network (74);
b) execution of an instruction from the data network (74); wherein
the data network (74) is in particular a LAN, a WAN or the Internet.

13. Generator switch (1) according to the preceding claim, wherein an alarm can be sent to the data network (74) when the predefined minimum level of the coolant is undershot.

## Revendications

1. Commutateur de générateur (1), comprenant
un blindage (2) qui est au potentiel de masse lorsque le commutateur de générateur (1) est en fonctionnement, un conducteur de courant (5) qui est disposé de manière isolée électriquement à l'intérieur du blindage (2) et qui est à un potentiel de haute tension lorsque le commutateur de générateur (1) est en fonctionnement, un dispositif de refroidissement (3) à entraînement gravitationnel qui comprend un évaporateur (10), un condenseur (20) disposé au-dessus de l'évaporateur (10) et un réfrigérant (4),
l'évaporateur (10) étant relié thermiquement au conducteur de courant (5) et étant donc à un potentiel de haute tension lorsque le commutateur de générateur (1) est en fonctionnement, et le condenseur (20) étant relié au blindage (2) et étant donc au potentiel de masse lorsque le commutateur de générateur (1) est en fonctionnement,
l'évaporateur (10) étant relié au condenseur (20) par le biais d'un système de conduites (30) pourvu d'un isolateur (40) de sorte que, lorsque le commutateur de générateur (1) est en fonctionnement, la vapeur de réfrigérant peut s'écouler de l'évaporateur (10) au condenseur (20) et le réfrigérant liquide peut s'écouler du condenseur (20) à l'évaporateur (10),
l'isolateur (40) comportant une section isolante (60) pourvue d'une extrémité supérieure (61),
le système de conduites (30) comportant un conducteur de réfrigérant (31) qui relie une sortie de réfrigérant (21) du condenseur (20) à une entrée de réfrigérant (11) de l'évaporateur (10) et comportant en outre un conducteur de vapeur de réfrigérant (32) qui relie une sortie de vapeur de réfrigérant (12) de l'évaporateur (10) à une entrée de vapeur de réfrigérant (22) du condenseur (20) de façon à former un circuit de refroidissement fermé,
**caractérisé en ce que**
le circuit de refroidissement fermé a une forme annulaire,
lorsque le commutateur de générateur (1) est en fonctionnement, un niveau (70) du réfrigérant (4) dans le système de conduites (30), avec le dispositif de refroidissement (3) au repos, est au moins aussi haut que l'extrémité supérieure (61) de la section isolante (60) de l'isolateur (40),
l'isolateur (40) comporte une portion du conducteur de réfrigérant (31) conçue comme un premier canal isolant (41) et une portion du conducteur de vapeur de réfrigérant (32) conçue comme un deuxième canal isolant (42), et
l'isolateur (40) comporte un corps isolant (43) qui reçoit les deux canaux isolants (41, 42) et, pour chaque canal isolant (41, 42), une première pièce de raccordement (44) qui est reliée au conducteur de courant (5) et une deuxième pièce de raccordement (45) qui est reliée au condenseur (20).

2. Commutateur de générateur (1) selon la revendication précédente, le conducteur de vapeur de réfrigérant (32) étant isolé thermiquement du conducteur de réfrigérant (31) .

3. Commutateur de générateur (1) selon l'une des revendications précédentes, comprenant un réservoir de réfrigérant (50), le réservoir de réfrigérant (50) étant disposé dans le condenseur (20).

4. Commutateur de générateur (1) selon l'une des revendications précédentes 1 et 2, comprenant un réservoir de réfrigérant (50), le réservoir de réfrigérant (50) étant disposé dans le conducteur de réfrigérant (31).

5. Commutateur de générateur (1) selon l'une des revendications précédentes 1 et 2, comprenant un réservoir de réfrigérant (50), le réservoir de réfrigérant (50) étant relié au conducteur de courant (5) de sorte que le réservoir de réfrigérant (50) est au potentiel de haute tension du conducteur de courant (5).

6. Commutateur de générateur (1) selon l'une des revendications précédentes, la première pièce de raccordement (44) étant disposée à l'extrémité inférieure de la section isolante (60) et la deuxième pièce de raccordement (45) étant disposée à l'extrémité supérieure de la section isolante (60) et lesdites pièces de raccordement étant en métal, et leurs extrémités, qui sont guidées de l'extérieur jusque dans le premier ou le deuxième canal isolant (41, 42), étant chacune conçues comme des électrodes de commande de champ (46).

7. Commutateur de générateur (1) selon l'une des revendications précédentes, au moins la première pièce de raccordement (44) ou la deuxième pièce de raccordement (45) étant réalisée sous la forme de pièces de dérivation (44a, 44b) pourvues d'une pluralité de raccords de vapeur de réfrigérant (442) ou d'une pluralité de raccords de réfrigérant (441).

8. Commutateur de générateur (1) selon l'une des revendications précédentes, l'évaporateur (10) contenant un groupe d'au moins deux portions d'évaporateur (10a, 10b, 10c) comprenant chacun au moins deux raccords, un premier raccord des deux raccords d'une première portion d'évaporateur (10a) du groupe de portions d'évaporateur formant l'entrée de réfrigérant (11) de l'évaporateur (10), un premier raccord des au moins deux raccords d'une deuxième portion d'évaporateur (10c) du groupe de portions d'évaporateur formant la sortie de vapeur de réfrigérant (12) de l'évaporateur (10), et un deuxième raccord de la première portion d'évaporateur (10a) étant relié à un deuxième raccord de la deuxième portion d'évaporateur (10c) ou à un raccord d'une troisième portion d'évaporateur (10b) du groupe de portions d'évaporateur.

9. Commutateur de générateur (1) selon l'une des revendications précédentes, le condenseur (20) étant conçu comme un échangeur de chaleur et comportant deux espaces (24, 25) qui sont séparés l'un de l'autre par une paroi thermiquement conductrice (23) et dont un premier espace (24) des deux espaces (24, 25) fait partie d'un circuit primaire destiné au réfrigérant et à la vapeur de réfrigérant et communique avec la sortie de réfrigérant (21) et l'entrée de vapeur de réfrigérant (22) du condenseur (20) tandis que le deuxième espace (25) des deux espaces (24, 25) fait partie d'un circuit secondaire destiné à un fluide accumulateur de chaleur et comporte deux raccords de fluide (26, 27) pouvant être reliés à un consommateur de chaleur.

10. Commutateur de générateur (1) selon la revendication précédente, la paroi thermiquement conductrice (23) étant électriquement isolante.

11. Commutateur de générateur (1) selon l'une des revendications précédentes, le dispositif de refroidissement (3) comportant un capteur (72) destiné à détecter le niveau (70) ou au moins un niveau minimum prédéfini du réfrigérant (4) à l'état liquide.

12. Commutateur de générateur (1) selon la revendication précédente, le capteur (72) comportant une interface réseau destinée à être intégrée dans un réseau de données (74) de façon à pouvoir intégrer le capteur (72) de manière opérationnelle dans le réseau de données afin de pouvoir remplir l'une au moins des fonctions suivantes :
a) envoyer une information d'état du capteur (72) au réseau de données (74) ;
b) exécuter une instruction depuis le réseau de données (74) ;
le réseau de données (74) étant notamment un LAN, un WAN ou l'Internet.

13. Commutateur (1) de générateur selon la revendication précédente, une alarme étant délivrée au réseau de données (74) lorsque le réfrigérant descend au-dessous du niveau minimum prédéfini.
